# EUROPEAN PATENT APPLICATION

(11) **EP 1 772 711 A2**
(43) Date of publication of application: **11.04.2007**
(21) Application number: 06001176.4
(22) Date of filing: 20.01.2006
(51) Int. Cl.: G01F 15/18

(54) **Support for domestic gas meter**

(30) Priority: 04.10.2005 IT mi20051856
(71) Applicant: Seppelfricke Distribuzione S.r.l., 31058 Susegana TV (IT)
(72) Inventor: Bravi, Oswaldo, 31015 Conegliano (TV) (IT)
(74) Representative: Jaumann, Paolo

(57) **Abstract**

The subject of the present invention is a gas meter support unit comprising a shut-off valve for connecting the meter to the gas distribution network, and a connector for joining the meter to the end user's pipework, and is characterized in that the shut-off valve and the connector are shaped at right angles. In one preferred embodiment, the upper parts of the right angled connector and the cut-off angle valve have threaded sections for connection to suitable means of support.

## Description

The present invention relates to a support unit for gas meters.

For the purposes of installation, gas meters are connected to the gas distribution network through a shut-off valve, and to the end of the pipework of the individual user being connected to said distribution network, through a linear connector.

In particular, the meter is supported directly by the gas distribution network pipework, solely by means of the connection to the shut-off valve, since the end user's pipework is not intended to support the weight of the meter.

Said installation is unstable over time, since the meter's fixing point, i.e. the point where the shut-off valve is joined to the meter, by not being aligned with respect to the meter's centre of gravity, is constantly under torque. Over the long term, this causes the pipe joints connecting the meter to the shut-off valve to become loose. Consequently, the shut-off valve seal begins to deteriorate, so that gas leaks may occur.

Furthermore, this type of gas meter fixing requires that the gas meter input and output must face vertically downward and upwards respectively, since both the shut-off valves and the connectors currently used are linear. That means it is sometimes necessary to use special connecting pipes.

Generally, the use of connecting pipes to make vertical inputs and outputs to and from the meter respectively causes significant difficulty for the installers, who are frequently forced to resort to compromise solutions, not always in compliance with most of the current regulations.

Furthermore, over time, the joints between the individual connectors used, even if well sealed, can become the sources of gas leaks.
Finally and disadvantageously, in order to test an installed meter using the known means, the installer must use a special device which measures the pressure inside the meter, thus making the installation process even longer and more difficult.

Currently, gas meter support units, specifically for connecting to a gas manifold are known, foreseeing the use of a linear valve which is screwed directly onto the gas manifold, and a 90° joint, on the upper face of which is a tie bar connected to a collar for fixing to the manifold.

Despite eliminating the torque on the shut-off valve by means of attaching the connector to the manifold and thus resolving the problem of instability over time, such systems are incapable of overcoming the many further drawbacks characterizing gas meter installation. Thus, for example, the known support units cannot also guarantee stable support for installations some distance from the manifold, for example when the meter is installed in the premises of an individual end user.

Furthermore, support by means of the gas manifold has drawbacks since, in the case of installation in a battery, for the purposes of compliance with current regulations, it is a requirement that the possibility to operate the shut-off valve be limited solely to the user concerned, for example by means of a cabinet for each individual user. Furthermore, use of a cabinet is also necessary to protect the meters from tampering, particularly for outdoor installations.

Supporting meters on the manifold does not permit the use of cabinets, so that on the one hand it is necessary to employ special shut-off units that can be locked in their open and closed positions by means of a key for example, and, on the other hand, the use of special housings for the entire battery is also necessary.

The benefit offered by the present invention is that of eliminating all the above mentioned drawbacks in the installation of gas meters, by devising a gas meter support unit offering the advantage of balanced and stable support over time, and which need not be screwed directly to the pipework of the gas distribution network.

Within the scope of this benefit, one aim of the present invention is to provide a gas meter support unit allowing connection to the gas distribution network pipework and to the individual end user, reducing the need for any connecting pipework.

A further aim of the present invention is to provide a gas meter support unit permitting the installation of meters in a battery, in compliance with current regulations.

An ulterior aim of the present invention is to provide a meter support unit which does not require special means for testing gas meter installation.

This benefit, as well as the present and other aims which will be clarified later, are achieved by the gas meter support unit according to the invention, comprising a shut-off valve for connecting the meter to the gas distribution network, and a connector for joining the meter to the end user's pipework, characterized in that the shut-off valve and the connectors are shaped at right angles.

Conveniently, the right angled connector and the cut-off angle valve have threaded sections on their upper parts for connection to suitable means of support.

Advantageously, the lower parts of the connector and the valve have pipe joints for connecting to the gas meter, the joints may only move relative to the connector body by translation along a vertical axis.

Further characteristics and advantages of the invention will become apparent from the description of a preferred, but not exclusive, embodiment of the meter support unit, shown by way of non-limiting example in the appended drawings, wherein:

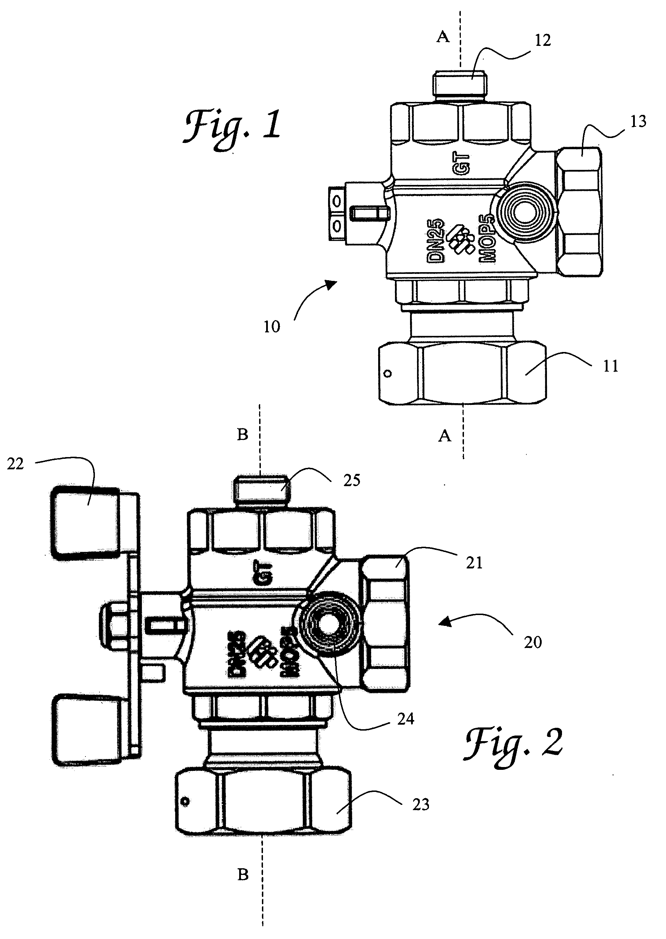

figure 1 is a side view of the support unit connector according to the invention;
figure 2 is a side view of a support unit angle valve according to the invention;
figure 3 is a representation of a first application of the support unit according to the invention;
figure 4 is a representation of a second application of the support unit according to the invention;

As shown schematically in the figures, the gas meter 4 support unit 1 according to the invention comprises a shut-off angle valve 20 and a connector 10, itself also right angled, so that in entering and exiting the meter 4, the gas is forced to follow a right angled path through the corresponding valve 20 and connector 10 bodies respectively.

Hence, the gas enters the shut-off angle valve 20 at right angles to the vertical axis B, by means of the inlet 21 positioned on the opposite side with respect to gas opening and closing butterfly tap 22. The gas also exits the connector 20 at right angles with respect to the vertical axis A, by means of the outlet 13.

The angle valve 20 is fitted with a pressure outlet 24, in the proximity of the inlet 21, for measuring the gas pressure during installation testing, so that special means are no longer necessary for this purpose.

The connector 10 and the valve 20 each have pipe joints 11,23 on their lower sections for connection to the gas meter 4, which may only move relative to the connector body and the valve by translation along the vertical axes A and B respectively.

This means that, with the meter 4 in position, the pipe joints 11,23 allow the 360° rotation of the connector 10 and the valve 20 around their corresponding vertical axes A,B. The adjustability of the connector 10 and the valve 20 facilitates connection of the meter 4 to the individual user's pipework and to the gas distribution network, making the use of any special connection tubes unnecessary.

Threaded sections 12,25, preferably threaded both internally and externally, are arranged on the upper sections of the connector 10 and the valve 20 for fixing to the gas meter 4 special means of support 5,6.

Hence, it is possible to support the meter by means of both elements, the valve 2 and the connector 10, thus obtaining a balanced support and avoiding the development of torque which might destabilize the connection between the meter 4 and the support unit 1 over time. Furthermore, the meter may be supported using suitable specific means 5,6.

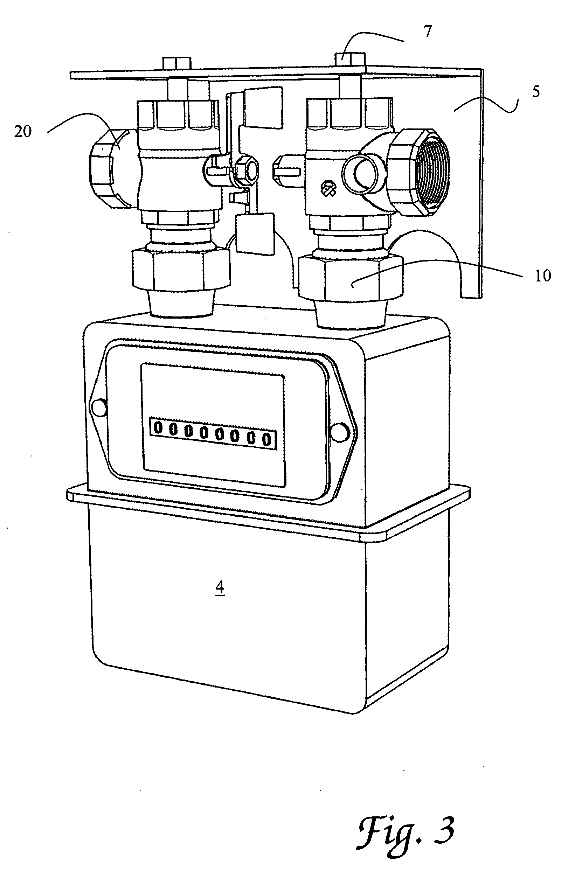

Figure 3 shows one particular embodiment of the gas meter 4 support. The gas meter 4 is fixed, by means of the support unit 1 according to the invention, to a meter support bracket 5, to which both the connector 10 and the valve 20 are fixed by screwing their corresponding threaded sections 12,23 to special pipe joints 7.

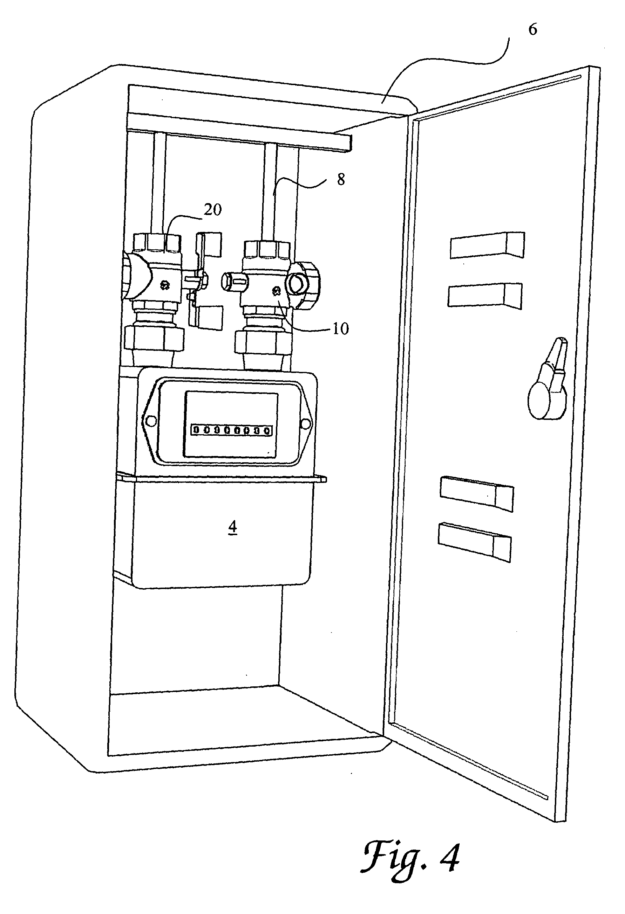

Figure 4 depicts the installation of a gas meter, using the support unit 1 according to the invention, within a special gas meter 4 containment cabinet 6. In this case, the support unit 1 elements are each screwed to a threaded support bar 8 inside the cabinet 6.

In both embodiments, support is no longer provided directly by the gas distribution network pipework, such as for example the manifold, but by suitable means of support 5,6 specially devised to support the meter, thus ensuring greater stability of the meter 4 fixing over time.

In practice it has been observed that the gas meter support unit according to the invention fully discharges its role, as well as the established aims, in that it is capable of guaranteeing stable fixing of the gas meter over time.

Indeed, by means of the right angled connector and valve, the meter is fixed in a balanced manner to suitable means of support.
It has furthermore been ascertained that the gas meter support unit according to the invention thus described aids installation of the gas meter by reducing the need for special connecting pipes and helping the installers to operate in full compliance with current regulations.

Furthermore, the use of two elements having the same body, as in the case of the right angled valve and connector, allows optimizing manufacture of the support unit, effectively bringing advantages due to large scale effects, and consequently reduced production costs.

The invention thus conceived is susceptible to numerous modifications and variations, all falling within the scope of the original concept. Furthermore, all the components may be substituted by others and the materials used as well as the dimensions may be altered according to need.

Accordingly, the scope of protection of the claims must not be limited by the figures or by the preferred embodiments illustrated by way of example in the description, but rather the claims must include all the novel patentable characteristics residing in the present invention, including all the characteristics which might be treated as equivalents by one skilled in the art.

## Claims

1. A support unit for a gas meter (4) comprising a shut-off valve (20) for connecting said meter (4) to the gas distribution network, and a connector (10) for connecting said meter (4) to the end users pipework, **characterized in that** said valve (20) and said connector (10) are shaped at right angles.

2. The support unit for a gas meter (4) according to claim 1, **characterized in that** the upper part of said right angled connector (10) has a threaded section (12) for connecting to suitable means of support (8).

3. The support unit for a gas meter (4) according to claim 2, **characterized in that** said threaded section has internal and external threading.

4. The support unit for a gas meter (4) according to any of the preceding claims, **characterized in that** the lower part of said connector (10) has a pipe joint (11) for connecting to the gas meter (4), said pipe joint (11) only being free to move relative to the body of said connector (10) by translation along a vertical axis (A).

5. The support unit for a gas meter (4) according to any of the preceding claims, **characterized in that** the upper part of said angle valve (20) has a threaded section (25) for connecting to suitable means of support (8).

6. The support unit for a gas meter (4) according to claim 5, **characterized in that** said threaded section has internal and external threading.

7. The support unit for a gas meter (4) according to any of the preceding claims, **characterized in that** the lower part of said angle valve (20) has a pipe joint (23) for connecting to the gas meter (4), said pipe joint (23) only being free to move relative to the body of said valve (20) by translation along a vertical axis (B).

8. The support unit for a gas meter (4) according to any of the preceding claims, **characterized in that** said angle valve (20) has an inlet (24) for measuring pressure.

9. The support unit for a gas meter (4) according to one of the preceding claims, **characterized in that** said support unit is fixed to a meter support bracket (5).

10. The support unit for a gas meter (4) according to one of the preceding claims, **characterized in that** said support unit is fixed inside a gas meter containment cabinet (6).
